# EUROPÄISCHE PATENTSCHRIFT

(11) **EP 2 003 381 B1**
(45) Veröffentlichungstag und Bekanntmachung des Hinweises auf die Patenterteilung: **24.04.2013**
(21) Anmeldenummer: 08010085.2
(22) Anmeldetag: 03.06.2008
(51) Int. Cl.: F16K 31/08

(54) **Ventil in einer Vorrichtung für die Kryotherapie**
Valve in a cryotherapy device
Soupape dans un dispositif pour la cryothérapie

(30) Priorität: 16.06.2007 DE 102007027786
(43) Veröffentlichungstag der Anmeldung: 17.12.2008
(73) Patentinhaber: Damm, Hans, 76473 Iffezheim (DE)
(72) Erfinder:
(74) Vertreter: Jany und Petersen

(56) Entgegenhaltungen:
- US-A- 4 848 725
- US-A1- 2005 061 302

## Beschreibung

Die Erfindung betrifft ein Ventil zur Verwendung in einer Vorrichtung für die Kryotherapie, mit einer mit verflüssigtem Kohlendioxid beaufschlagbaren Druckseite und mit einer mit einer Auslassöffnung verbindbaren Abgabeseite, in welchem eine Ventilnadel mittels eines Elektromagneten, der einen Schieber aufweist, von einem Dichtungssitz zum Öffnen des Ventils anhebbar ist.

Unter der Kryotherapie versteht man die Behandlung von verschiedenen Leiden durch oberflächliche Einwirkung großer Kälte. Diese führt bekanntermaßen zu verschiedenen physiologischen Wirkungen, z.B. der Herabsetzung der Schmerzschwelle, einer Verminderung der Spastik, eine Entspannung von Muskelfasern oder auch einer blutstillenden Wirkung.

Früher wurde hierzu insbesondere verflüssigter Stickstoff benutzt, der allerdings aufgrund der speziellen Bedingungen, unter denen er gelagert werden muss, schwere unhandliche Vorrichtungen benötigt. Aus diesen Vorrichtungen verdampfte der verflüssigte Stickstoff ständig, was unerwünschte Verluste verursachte. Außerdem ist flüssiger Stickstoff nur mit hohem Aufwand zu transportieren und großflächig bereitzustellen, was seinem Einsatz entsprechend entgegensteht.

Es ist diesbezüglich beispielsweise aus der EP-0 633 008 bekannt, statt Stickstoff verflüssigtes Kohlendioxid zu verwenden, das aus einer Druckflasche entnommen wird und über eine druckfeste Leitung zu einer pistolenartigen Vorrichtung geführt wird, in der es entspannt und dann ausgestoßen wird. Dabei kann das ausgestoßene Gas Temperaturen von minus 75 °C erreichen, wodurch die hiermit behandelte Haut innerhalb weniger Sekunden von ihrer Normaltemperatur (ca. 32 °C) heruntergekühlt werden kann auf Temperaturen von 0 °C bis 5 °C.

Entsprechende Vorrichtungen hierzu, insbesondere auch für einen mobilen Einsatz, sind beispielsweise bekannt aus den Druckschriften EP 1 059 904 oder EP 1 328 205, die die Merkmale des Oberbegriffs des Anspruchs 1 zeigt.

Es hat sich dabei herausgestellt, dass der entsprechende Thermoschock, z.B. zu einer neuroreflektorischen Ausdehnung der Gefäße im betroffenen Bereich führt, wodurch Entzündungsmediatoren schneller abtransportiert werden.

Weitere Wirkungsweisen sind noch nicht abschließend wissenschaftlich erforscht.

Bei der Vorrichtung, die in der oben erstgenannten Druckschrift beschrieben wird, wird für das dort vorgesehene Ventil, mit dem das Ausströmen von CO₂ gesteuert wird, eine mechanische Betätigung vorgesehen. Diese ist relativ unhandlich. Außerdem ist es relativ anstrengend, auf Dauer manuell eine Kraft aufzubringen, mit der das Ventil gegen die Kraft einer Feder geöffnet gehalten wird. Dabei ist auch zu berücksichtigen, dass die mit dem Ventil zu beherrschenden Drücke druckseitig bei 50 - 60 bar und höher liegen können.

Bei den nachgenannten Vorrichtungen für den mobilen Einsatz in der Kryotherapie werden statt eines mechanischen Ventiles elektrisch betätigte Magnetventile eingesetzt. Es hat sich dabei aber herausgestellt, dass diese für ihre Betätigung erheblich Erregerströme benötigen, so dass die für die Betätigung der Elektromagneten vorgesehene Batterien, Akkumulatoren o.ä. relativ schnell "verbrauchen", was generell als nachteilig empfunden wird.

Aufgabe der vorliegenden Erfindung ist es unter diesem Aspekt, eine Vorrichtung der eingangs beschriebenen Art im Hinblick auf ihren Energieverbrauch bei der Betätigung der Ventile zu verbessern.

Diese Aufgabe wird erfindungsgemäß dadurch gelöst, dass der Schieber, der über den Elektromagneten bewegt wird und über den eine Ventilnadel von einem Dichtungssitz zum Öffnen des Ventils angehoben wird, an einem außerhalb der Spule des Elektromagneten liegenden Ende dauermagnetisch ausgestaltet ist.

Bei einer besonders bevorzugten Ausführungsform wird dies insbesondere dadurch erreicht, dass an dem besagten Ende als Permanentmagnet wenigstens ein Scheibenmagnet befestigt ist. Solche Scheibenmagnete sind käuflich erwerblich und bieten damit eine Möglichkeit, die erwünschte dauermagnetische Ausgestaltung an dem einen Schieberende auf einfache Weise zu realisieren.

Insbesondere, indem das entsprechend dauermagnetisch ausgestattete Ende innerhalb einer ferromagnetischen Ringscheibe angeordnet ist, die insbesondere in axialer Verlängerung der Spule platziert ist, lässt sich der gewünschte Effekt realisieren.

Diese Ringscheibe ist dabei insbesondere außerhalb eines Ringkernes vorgesehen direkt neben einem Schenkel einer zu dem Ringkern gehörenden Klammer.

Eine derartige Konstruktion hat überraschenderweise zu einer erheblichen Absenkung der für die Betätigung des Magnetventils benötigten Betriebsspannung geführt bei einem gleichzeitig erhöhten Magnetfluss. Hierdurch kann die für eine Magnetbetätigung benötigte Energie effizienter eingesetzt werden. Entsprechende Geräte für die Kryotherapie können somit insgesamt kleiner und leichter ausgestaltet werden, da ein entsprechend vorzusehendes Elektromagnetventil kleiner ausgestaltet sein kann und/oder eine vorzusehende Energieversorgung (sei es ein Akku, eine Batterie oder ein Transformator) kleiner auszulegen und damit preiswerter zu realisieren ist.

Um eine Durchströmung des Ventils zu gewährleisten, ohne dass sich in diesem in unerwünschter Weise Trockeneis o.ä. bildet, wird vorgeschlagen, das zu entspannende Kohlendioxid entlang der Ventilnadel durch den Elektromagnet zu führen und hierfür an der Ventilnadel wenigstens einseitig einen parallel zu ihrer Achse verlaufenden Durchströmkanal vorzusehen.

Bei einer fertigungstechnisch bevorzugten Variante weist die Ventilnadel hierzu einen im wesentlichen kreisförmigen Querschnitt auf mit wenigstens einem seitlich abgeflachten Abschnitt. Wenn eine solche Ventilnadel in bekannter Weise in einer kreisrunden Bohrung geführt wird, fungiert der seitlich abgeflachte Abschnitt als entsprechender Durchtrittskanal, bei dem aufgrund seines freien Querschnittes die Strömungsgeschwindigkeit des durchströmenden CO₂ so einzustellen ist, dass sich das unerwünschte Trockeneis nicht bildet.

Weitere Vorteile und Merkmale der Erfindung ergeben sich aus der nachfolgenden Beschreibung eines Ausführungsbeispiels. Dabei zeigt:
- Figur 1: die geschnittene Seitenansicht eines erfindungsgemäßen Magnetventils,
- Figur 2: die Schnittansicht einer eingebauten Ventilnadel.

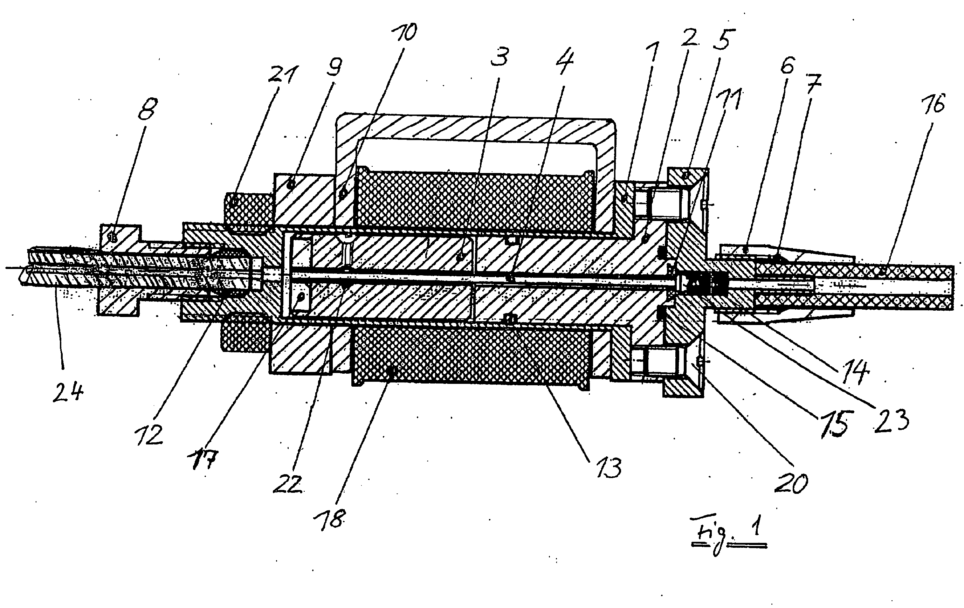

In der Figur 1 erkennt man den Längsschnitt durch ein erfindungsgemäßes Ventil. Eine rohrförmige Hülse 1 weist an ihrem hier rechts dargestellten einen Ende einen Flansch auf und an dem anderen Ende ist sie mit einem Boden, mit einem Außengewinde und mit einer axialen Anschlussbohrung durch den Boden hindurch versehen.

In das Innere dieser Hülse 1 wird ein Schieber 3 eingeführt, der mit einer axialen Bohrung versehen ist. In dieser axialen Bohrung ist eine Ventilnadel 4 eingesetzt und mit einer Schraube 22 in Axialrichtung fixiert. Der Schieber 3 kommt vor dem Boden der Hülse 1 zu liegen und ist in deren Axialrichtung beweglich. In das offene Ende der Hülse 1 wird dann vor dem Schieber 3 ein Stopfen 2 eingesetzt, der ebenfalls eine axiale Bohrung aufweist, die mit der axialen Bohrung des Schiebers 3 fluchtet. Die Ventilnadel 4 läuft dabei durch diese axiale Bohrung des Stopfens 2, der in der axialen Bohrung der Hülse 1 über eine O-Ringdichtung 13 abgedichtet ist.

Der Stopfen 2 ist an seinem außerhalb der Hülse 1 liegenden Ende mit einem Flansch versehen, der neben dem Flansch der Hülse 1 liegt und an dem mit Schrauben 20 unter Zwischenlage eines O-Ringes 15 als Dichtung ein Anschlussstück 5 befestigt ist. Auf einem durchbohrten Vorsprung dieses Anschlussstückes 5 ist mit einer Überwurfmutter 6 unter Zwischenschaltung eines Klemmringes 7 ein Anschlussschlauch 16 befestigt, der zu einer (nicht dargestellten) mit flüssigem Kohlendioxid gefüllten Druckflasche führt und einen Innendruck von etwa 50 - 60 bar aufweist. Dieser Schlauch 16 steht durch die axiale Bohrung im Vorsprung des Anschlussstückes 5 mit einer in diesem vorgesehenen Kammer in Strömungsverbindung, wo eine Feder 14 in Axialrichtung auf einen Kopf 23 der Ventilnadel 4 drückt und diese gegen eine Dichtung 11 presst.

Auf das Äußere der Hülse 1 ist im Anschlag gegen deren Flansch von links eine Klammer 10 für einen Ringkern gesetzt, die die Spule 18 des Elektromagneten U-förmig umgreift, die koaxial zu der Hülse 1 ebenfalls auf dieser aufgesetzt ist.

In axialer Verlängerung der Spule 18 sitzt außerhalb der Klammer 10 des Ringkerns benachbart zu deren linkem Schenkel eine ferromagnetische Scheibe 9, die über eine Sechskantmutter 21, die auf dem Außengewinde der Hülse 1 aufgeschraubt wird, gegen die Klammer 10 und mit dieser zusammen mit der Spule 18 von links gegen den Flansch der Hülse 1 gepresst wird. In den Boden der Hülse 1 ist ein Anschlussstutzen 8 eingeschraubt mit dem ein Schlauch 24 gehalten wird, der zu der (ebenfalls nicht dargestellten) Ausgabeöffnung einer Kryotherapievorrichtung führt.

Das soweit konstruktiv beschriebene Ventil funktioniert nun so, dass der Kopf 23 der Ventilnadel 4 durch die Feder 14 gegen die Dichtung 11 gedrückt wird. Bei einer elektrischen Erregung der Spule 18 wird ein Magnetfeld aufgebaut, das durch den Ringkern mit der Klammer 10 verstärkt wird, wodurch dann auf den Schieber 3 eine Axialkraft ausgeübt wird, die über die Ventilnadel 4 der Kraft der Feder 14 entgegenwirkt. Der Schieber 3 und die Ventilnadel 4 werden dadurch ein kleines Stück nach links bewegt und damit wird der Kopf 23 von der Dichtung 11 abgehoben. Damit kann das unter hohem Druck im Anschlussschlauch 16 stehende Kohlendioxid durch die axialen Bohrungen im Stopfen 2 und dem Schieber 3 hindurchströmen und am hier dargestellten linken Ende der Hülse 1 in den Schlauch 24 geleitet werden.

Um die Kräfte, die durch die Spule 18 in magnetischer Weise erzeugt werden zu verstärken, ist im hier dargestellten Beispiel der Schieber 3 an seinem linken Ende mit einem Scheibenmagnet 17 versehen, der axial in dem Bereich angeordnet ist, der außerhalb der Hülse 1 durch die ferromagnetische Scheibe 9 abgedeckt wird.

Diese Konstruktion resultiert darin, dass die ferromagnetische Scheibe 9 in Zusammenhang mit dem Permanentmagneten 17 einen erhöhten Magnetfluss bewirkt. Die Betriebsspannung für die Betätigung der Spule 18 des Elektromagneten ist damit erheblich abzusenken.

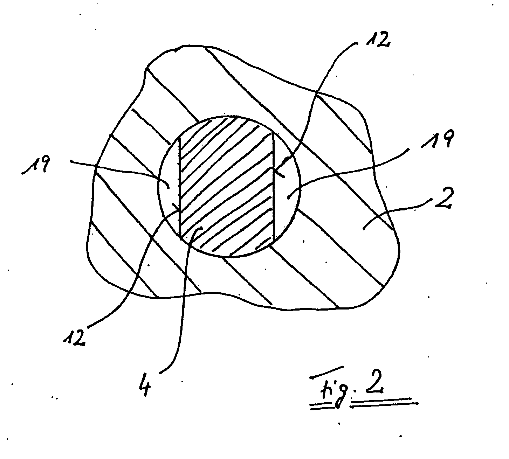

In der Figur 2 erkennt man noch, dass die Ventilnadel 4 abgeflachte Seitenflächen 12 aufweist, so dass sich, wenn sie in eine kreisrunde Bohrung z.B. im Stopfen 2 eingesetzt wird, parallel zu ihrer Längserstreckung verlaufende Hohlräume 19 ergeben, die Strömungskanäle bilden, in denen das durchströmende CO₂ daran gehindert wird, in unerwünschter Weise Trockeneis zu bilden.

## Patentansprüche

1. Ventil, insbesondere zur Verwendung in einer Vorrichtung für die Kryotherapie, mit einer mit verflüssigtem Kohlendioxid beaufschlagbaren Druckseite (16) und mit einer mit einer Auslassöffnung verbindbaren Abgabeseite (24), sowie mit einer Ventilnadel (4), die mittels eines Schiebers (3) eines Elektromagneten von einem Dichtungssitz (11) zum Öffnen des Ventils anhebbar ist,
**dadurch gekennzeichnet,**
**dass** der Schieber (3) an einem außerhalb der Spule (18) des Elektromagneten liegenden Endes dauermagnetisch ausgestaltet ist.

2. Ventil gemäß Anspruch 1,
**dadurch gekennzeichnet,**
**dass** an dem besagten Ende wenigstens ein Scheibenmagnet (17) befestigt ist.

3. Ventil gemäß Anspruch 1,
**dadurch gekennzeichnet,**
**dass** das Ende innerhalb einer ferromagnetischen Ringscheibe (9) angeordnet ist.

4. Ventil gemäß Anspruch 3,
**dadurch gekennzeichnet,**
**dass** die Ringscheibe (9) außerhalb eines Ringkernes neben einem Schenkel einer zu diesem gehörenden Klammer (10) angeordnet ist.

5. Ventil gemäß Anspruch 1,
**dadurch gekennzeichnet,**
**dass** die Ventilnadel (4) wenigstens einseitig einen parallel zu ihrer Achse verlaufenden Durchströmkanal (19) aufweist.

6. Ventil gemäß Anspruch 5,
**dadurch gekennzeichnet,**
**dass** die Ventilnadel (4) einen im wesentlichen kreisförmigen Querschnitt hat mit wenigstens einem seitlich abgeflachten Abschnitt (12).

## Claims

1. Valve, especially for use in a device for cryotherapy, having a pressure side (16) arranged to be acted upon by liquefied carbon dioxide and having a delivery side (24) arranged to be connected to an outlet opening, and having a valve needle (4) which, by means of a slider (3) of an electromagnet, can be lifted away from a sealing seat (11) to open the valve,
**characterised in that**
the slider (3) is permanently magnetic at an end located outside the coil (18) of the electromagnet.

2. Valve according to claim 1,
**characterised in that**
at least one disc magnet (17) is mounted on the said end.

3. Valve according to claim 1,
**characterised in that**
the end is arranged inside a ring-shaped ferromagnetic disc (9).

4. Valve according to claim 3,
**characterised in that**
the ring-shaped disc (9) is arranged outside an annular core next to an arm of a clip (10) that belongs to the core.

5. Valve according to claim 1,
**characterised in that**
the valve needle (4) has, on at least one side, a throughflow channel (19) running parallel to the axis of the needle.

6. Valve according to claim 5,
**characterised in that**
the valve needle (4) has a substantially circular cross-section with at least one laterally flattened portion (12).

## Revendications

1. Soupape, en particulier destinée à être utilisée dans un dispositif pour la cryothérapie, avec un côté pression (16) pouvant être exposé à du dioxyde de carbone liquéfié, avec un côté décharge (24) pouvant être relié à une ouverture de sortie et avec une aiguille de soupape (4) qui peut être levée d'un siège d'étanchéité (11) pour ouvrir la soupape au moyen d'un poussoir (3) d'un électroaimant,
**caractérisée en ce**
**que** le poussoir (3) est conçu à aimantation permanente à une extrémité située à l'extérieur de la bobine (18) de l'électroaimant.

2. Soupape selon la revendication 1,
**caractérisée en ce**
**qu'**au moins un aimant discoïdal (17) est fixé à ladite extrémité.

3. Soupape selon la revendication 1,
**caractérisée en ce**
**que** l'extrémité est disposée à l'intérieur d'un disque annulaire ferromagnétique (9).

4. Soupape selon la revendication 3,
**caractérisée en ce**
**que** le disque annulaire (9) est disposé à l'extérieur d'un noyau annulaire à côté d'une branche d'une agrafe (10) appartenant à celui-ci.

5. Soupape selon la revendication 1,
**caractérisée en ce**
**que** l'aiguille de soupape (4) présente, au moins d'un côté, un canal d'écoulement (19) qui s'étend parallèlement à son axe.

6. Soupape selon la revendication 5,
**caractérisée en ce**
**que** l'aiguille de soupape (4) présente une section sensiblement circulaire avec au moins une partie aplatie (12) sur le côté.
